# EUROPÄISCHE PATENTSCHRIFT

(11) **EP 0 772 643 B1**
(45) Veröffentlichungstag und Bekanntmachung des Hinweises auf die Patenterteilung: **09.09.1998**
(21) Anmeldenummer: 95926879.8
(22) Anmeldetag: 14.07.1995
(51) Int. Cl.: C08G 77/08, C08K 5/00

(54) **KATALYSATOR ZUR HERSTELLUNG UND VERARBEITUNG VON POLYORGANOSILOXANEN**
CATALYST FOR PREPARING AND PROCESSING POLYORGANOSILOXANES
CATALYSEURS POUR LA PRODUCTION ET LE TRAITEMENT DE POLYORGANOSILOXANES

(30) Priorität: 23.07.1994 DE 4426213
(43) Veröffentlichungstag der Anmeldung: 14.05.1997
(73) Patentinhaber: Hüls Silicone Gesellschaft mit beschränkter Haftung, D-01610 Nünchritz (DE)
(72) Erfinder: BEUSCHEL, Günter, D-01612 Nünchritz (DE); RAUTSCHEK, Holger, D-01612 Nünchritz (DE); LIESCH, Gisela, D-01587 Riesa (DE)
(74) Vertreter: Zöllner, Gudrun
(86) Internationale Anmeldenummer: EP9502761
(87) Internationale Veröffentlichungsnummer: WO9603455

(56) Entgegenhaltungen:
- EP-A- 0 342 519
- EP-A- 0 544 318
- EP-A- 0 559 045
- DE-A- 4 242 622
- Römpps Chemie-Lexikon, 7. Aufl. [1974], Franckh'sche Verlagsbuchhandlung, Stuttgart, S. 2130-2131
- Fluka, Chemika-BioChemika 1993/1994, [1993], Fluka Chemie AG, Buchs, S. 100 u. 358
- W. Noll, Chemistry and Technology of Silicones, 2. Aufl. [1968], Academic Press, N.Y., S. 213
- Römpps Chemie-Lexikon, 9. Aufl., Georg Thieme Verlag, Stuttgart, S. 4167
- Ullmanns Encyclopädie der technischen Chemie, Bd. 21, 4. Aufl. [1982] Verlag Chemie, Weinheim, S. 498, 499

## Beschreibung

### Technisches Gebiet

Die Erfindung betrifft Katalysatoren zur Herstellung und Verarbeitung von Polyorganosiloxanen, insbesondere für die Verarbeitung von Siliconharzen, beispielsweise für die lösemittelfreie Herstellung von Glimmerisolierstoffen. Die Katalysatoren stellen silanisierte Verbindungen dar und weisen eine hohe katalytische Aktivität auf. Ein weiteres Anwendungsgebiet der silanisierten Verbindungen ist die Beschleunigung der Härtung von kondensationsvernetzenden Siliconkautschuken und Siliconharzen, insbesondere bei der Anwendung in Form von wasserhaltigen Formulierungen.

### Stand der Technik

Siliciumorganische Verbindungen, insbesondere Polyorganosiloxane haben wegen ihrer speziellen physikalischen Eigenschaften ein breites Anwendungsgebiet gefunden. Die Anwendung reicht von elastischen Dichtmassen bis hin zur Herstellung von Bauteilen für die Elektroindustrie, wo besonders hohe Anforderungen an die Eigenschaften der verarbeiteten Polyorganosiloxane gestellt werden, wie beispielsweise bei der Verwendung von Siliconharzen als Bindemittel in Glimmerisolierstoffen.

Das Patent DE 11 26 467 lehrt die Grundlagen zur Herstellung von Isolierstoffen auf Glimmerbasis unter Verwendung lösemittelhaltiger Siliconharze oder wäßriger Suspensionen. Die Herstellung von Glimmerisolierstoffen, bevorzugt mit lösemittelhaltigen Siliconharzen unter Zusatz von Katalysatoren, ist bekannt. Als Katalysatoren werden Lösungen aminischer, phosphororganischer oder metallorganischer Verbindungen eingesetzt. Umfangreiche Literaturzitate sind bei Noll, Chemie u. Technologie der Silicone angeführt (Noll, Chemie u. Technologie der Silicone, 2. Auflage, Weinheim 1968, S. 357).

Die Technologie auf der Basis von organischem Lösemittel war sicherheitstechnisch aufwendig und wurde durch die Weiterentwicklung zu wäßrigen Systemen verdrängt. Dazu werden wäßrige Suspensionen aus Glimmerbrei, Siliconharzpulver, Emulgatoren und Katalysatoren zu Prepregs verarbeitet und durch nachfolgende Verpressung harte, siliconharzgebundene Glimmerisolierstoffe erhalten.

Als Katalysatoren für wäßrige Systeme werden bevorzugt reine oder gemischte, pulverförmige oder angepastete, metallorganische Verbindungen, wie z. B. die Acetylacetonate des Aluminiums und Zinks sowie deren Umsetzungsprodukte, verwendet. Diese sind zwar weitgehend unlöslich, lösen sich jedoch im wesentlichen in den niedrigen Anwendungskonzentrationen in den wäßrigen Suspensionen. Da die katalytische Wirksamkeit durch den Anteil an Katalysator bestimmt wird, der vor der Trocknung im feuchten Glimmerpapier enthalten ist, muß, je besser die Löslichkeit des Katalysators ist, desto größer die zugesetzte Menge sein. Das anfallende Abwasser enthält somit den großen Anteil an Katalysator, der nicht im Glimmerpapier verbleibt und muß aufwendig aufgearbeitet werden. Weiterhin weisen die bekannten Katalysatoren eine mangelhafte katalytische Aktivität sowie die damit hergestellten Glimmerisolierstoffe eine geringe mechanische Festigkeit sowie eine zu hohe Wasseraufnahme und damit verschlechterte elektrische Eigenschaften auf.

Bei der Verarbeitung von Siliconharzen, z. B. als Bindemittel in Anstrichstoffen, werden Formulierungen auf Basis organischer Lösemittel immer mehr durch Emulsionen oder Dispersionen ersetzt. Als Katalysatoren für die Aushärtung dieser Harzformulierungen werden beispielsweise Mineralsäuren verwendet (EP 98 940). Das hat den Nachteil, daß zusätzlich eine Neutralisation des Katalysators notwendig ist. Auch die Anwendung von toluolischen Lösungen von Aluminium(III)- oder Eisen(III)-acetylacetonaten ist beschrieben (US 3 395 071, EP 342 519). Die Nachteile dieser Katalysatoren, das ist vorrangig die Umweltbelastung durch Lösemitteldämpfe, sind offensichtlich.

Auch bei der Formulierung von kondensationsvernetzenden Siliconkautschuken ist die Art der verwendeten Katalysatoren für die Verarbeitungseigenschaften und die physikalischen Kennwerte der Produkte entscheidend. Bei kondensationsvernetzenden Siliconkautschuken haben in letzter Zeit insbesondere wäßrige Formulierungen ein breites Interesse gefunden (Liles, D.T.: Polym. Mater. Sci. Eng. **66** (1992) S. 172-173). Diese enthalten als Katalysatoren meist zinnorganische Verbindungen (EP 354 015, US 5 145 907) und werden häufig in Form von Emulsionen verwendet. Aufgrund der Grenzflächenchemie der geeigneten flüssigen zinnorganischen Verbindungen sind dabei Emulgatoren erforderlich. Bekannt sind Alkylphenolethoxylate, beispielsweise Tributylphenolpolyglycolether (DE 42 17 561), welche jedoch toxisch sind.

### Darstellung der Erfindung

Aufgabe der Erfindung war es, einen Katalysator für die Herstellung und Verarbeitung von Polyorganosiloxanen, insbesondere durch Kondensationsreaktionen, bereitzustellen, der sich insbesondere in wäßrigen Formulierungen durch eine im Vergleich zum Stand der Technik erhöhte Wirksamkeit, verbesserte Verarbeitbarkeit sowie gute Umweltverträglichkeit auszeichnet.

Erfindungsgemäß ist der Katalysator eine silanisierte Verbindung mit einer Partikelgröße von 0,1 bis 100 µm, welche erhalten wird durch Umsetzung von
(A) einer, vorzugsweise festen oder pulverförmigen, hydrophoben und/oder wasserunlöslichen Verbindung der allgemeinen Formel

   R¹ _{b}MR² _{(w-b)-(z.c)}L_{c} (I),

   wobei R¹ gleiche oder verschiedene, substituierte und/oder unsubstituierte Carboxylreste mit 1 bis 30 Kohlenstoffatomen und/oder gleiche oder verschiedene, substituierte und/oder unsubstituierte Alkoxyreste mit 1 bis 4 Kohlenstoffatomen sowie R² gleiche oder verschiedene, substituierte und/oder unsubstituierte Kohlenwasserstoffrest mit 1 bis 10 Kohlenstoffatomen darstellen, M ein Metall der 2., 3. oder 4. Haupt- oder 2. bis 8. Nebengruppe des Periodensystems ist, L gleiche oder verschiedene Chelatliganden mit z Bindungen zum Metall M darstellt, w die Koordinationszahl von M ist, b einen Wert zwischen 1 und w sowie c Werte zwischen 0 und 3 annehmen, und/oder deren partiellen Hydrolysaten, mit
(B)einer siliciumorganischen Verbindung der allgemeinen Formel

   R³ ₐSiX₍₄₋ₐ₎ (II),

   wobei R³ gleiche oder verschiedene, substituierte und/oder unsubstituierten Kohlenwasserstoffreste mit 1 bis 10 Kohlenstoffatomen mit der Maßgabe bedeutet, daß mindestens ein Rest R³ je Verbindung (II) eine polare Gruppierung enthält, X ein hydrolysierbarer Rest, ausgewählt aus Alkoxy-, Alkenoxy-, Acetoxy,- Amino-, Amido-, Aminoxy,- Oximo- und/oder Halogengruppen und a eine ganze Zahl zwischen 1 und 3 ist, und/oder deren partiellen Hydrolysaten.

In der allgemeinen Formel (I) wird als Metall M bevorzugt Zinn, Zink, Aluminium, Zirkonium, Eisen, Titan oder Hafnium eingesetzt.

Beispiele für die eingesetzten Verbindungen der allgemeinen Formel (I) sind Aluminiumseifen von Carbonsäuren mit 4 bis 18 Kohlenstoffatomen wie Aluminiumhexanoat, Aluminiumheptanoat, Aluminiumoctanoat, Aluminiumethylhexanoat, Aluminiumnonanoat, Aluminiumdekanoat, Aluminiumlaurat, Aluminiummyristat, Aluminiumpalmitat, Aluminiumstearat, Aluminiumoleat, Aluminiumricinolat, Mischungen dieser Aluminiumseifen, gemischte Aluminiumseifen und Aluminiumseifen, die noch Reste von an Aluminium gebundenen Sauerstoff, z. B. als Hydroxylgruppe, enthalten. Weitere Beispiele für einsetzbare Verbindungen sind polymere Alkyltitanester oder -chelate, polymere Organozirkonester oder -chelate, polymere Organohafniumester oder -chelate eingesetzt werden. Diese Verbindungen erhält man durch partielle Hydrolyse von z. B. Tetramethyltitanat, Tetraethyltitanat, Tetrapropyltitanat, Tetraisopropyltitanat, Tetrabutyltitanat, Tetraisobutyltitanat, Kresyltitanat, Octylenglycoltitanat, Diisobutylbisacetylacetatotitanat, Triethanolamintitanat, Diisopropylbisacetylacetatotitanat, Titanchelate, die Zitronesäure als Chelatligand enthalten, den analogen Zirkonium oder Hafniumverbindungen oder Mischungen dieser Verbindungen.

Weitere Beispiele für Verbindungen, die für die Herstellung der erfindungsgemäßen Katalysatoren verwendet werden, sind Metallacetylacetonate, wie Aluminiumacetylacetonat, Eisenacetylacetonat, Zinkacetylacetonat, Calciumacetylacetonat, Nickelacetylacetonat, Titanacetylacetonat, Zirkoniumacetylacetonat und Hafniumacetylacetonat.

Die Verbindungen der allgemeinen Formel (I) haben vor der Silanisierung vorzugsweise eine Partikelgröße kleiner 100 µm, wobei Partikelgrößen kleiner 10 µm besonders bevorzugt sind.

In der allgemeinen Formel (II) sind unter polaren Gruppierungen, die in mindestens einem Rest R³ enthalten sind, alle Gruppierungen zu verstehen, bei denen ein Element mit einer höheren Elektronegativität als Kohlenstoff (z. B. Sauerstoff, Schwefel, Stickstoff oder Phosphor) direkt an ein oder mehrere Kohlenstoffatome im Rest R³ gebunden ist. Beispiele für derartige Gruppen sind Ethergruppen, Polyethergruppen, Estergruppen, Thioethergruppen, alkoholische OH-Gruppen, Mercaptogruppen, Aminogruppen, Amidogruppen, Imidogruppen, Ureidogruppen, Glycoside sowie Sauerstoff, Schwefel und/oder Stickstoff enthaltende heterocyclische Reste.

Bevorzugt bedeutet mindestens ein Rest R³ in der Verbindung der allgemeinen Formel (II) eine Gruppierung mit einem basischen Stickstoff. Dabei sind Gruppierungen der allgemeinen Formel R⁴₂N[YN(R⁴)]ₙY, wobei R⁴ gleiche oder verschiedene, substituierte und/oder unsubstituierte Reste mit 1 bis 10 Kohlenstoffatomen oder Wasserstoff, Y gleiche oder verschiedene, substituierte und/oder unsubstituierte, zweiwertige Kohlenwasserstoffreste mit 2 bis 6 Kohlenstoffatomen darstellt und n einen Wert zwischen 1 und 4 annimmt und der Rest X in der Verbindung der allgemeinen Formel (II) Alkoxygruppen darstellt, besonders bevorzugt.

Beispiele für derartige Verbindungen sind N-Methyl-3-aminopropyl-trimethoxysilan, 3-Aminopropyl-triethoxysilan, polyglykolethermodifizierte Aminosilane, 3-Aminopropyl-tris(2-methoxy-ethoxy)silan, 3-Aminopropyl-trimethoxysilan, 3-Aminopropyl-methyldiethoxysilan, aminofunktionelle Propyl-methyl-diethoxysilane, N-Aminoethyl-3-aminopropyl-trimethoxysilan, N-Aminoethyl-3-aminopropyl-methyl-di-methoxysilan, triaminofunktionelles Propyltrimethoxysilan, 3-Ureidopropyl-triethoxysilan, 3-4,5-Dihydroimidazol-1-yl-propyltrieth-oxysilan.

Die erfindungsgemäßen Katalysatoren werden üblicherweise erhalten durch Umsetzung von einer oder mehreren Verbindungen der allgemeinen Formel (I) mit einer oder mehreren Verbindungen der allgemeinen Formel (II) in Gegenwart von Wasser, bevorzugt werden 0,1 bis 50 Gew.-% Wasser, bezogen auf die Gesamtmenge, eingesetzt. Die erhaltenen Suspensionen werden nach Abschluß der Umsetzung entweder in Festbett und Flüssigkeit getrennt, getrocknet und vermahlen oder als wäßrige Paste angewendet.

Die Reihenfolge der Zugabe von Verbindung (I), Verbindung (II) und Wasser bei der Herstellung der erfindungsgemäßen Katalysatoren ist beliebig. Man kann die Verbindung (I) in Wasser suspendieren und dann Verbindung (II) zugeben. Es ist auch möglich, Verbindung (I) in Verbindung (II) zu verteilen und anschließend Wasser zuzugeben. Auch das Einmischen von Verbindung (I) in eine Mischung von Verbindung (II) und Wasser liefert die erfindungsgemäßen Katalysatoren.

Die Teilchengröße der Katalysatorpartikel beträgt 0,1-100 µm, vorzugsweise 1-10 µm.

Es ist möglich, die erfindungsgemäßen Katalysatoren gemeinsam mit den Füllstoffen in kondensationsvernetzende Einkomponenten-oder Zweikomponentensiliconkautschuke einzumischen oder in Kombination mit bekannten Katalysatoren zu verwenden, beispielswesie eine Paste aus getrocknetem, pulverförmigem, erfindungsgemäßen Katalysator und einem flüssigen Kondensationskatalysator wie z. B. Dibutylzinndilaurat.

Besonders geeignet sind die erfindungsgemäßen Katalysatoren in siliciumorganische Verbindungen enthaltenden Formulierungen, bei denen Wasser ein Bestandteil dieser Formulierungen ist. Vorteile entstehen durch eine gute Verarbeitbarkeit, hohe Wirksamkeit und gute Umweltverträglichkeit (keine organischen Lösemittel). In diesen wäßrigen, siliciumorganische Verbindungen enthaltenden Zusammensetzungen ist als siliciumorganische Verbindung eine oder mehrere Verbindungen der allgemeinen Formel

R⁵ _{d} (R⁶O)ₑSiO_{(4-d-e)/2} (III),

wobei R⁵ gleiche oder verschiedene, gesättigte und/oder ungesättigte, substituierte und/oder unsubstituierte einwertige Kohlenwasserstoffreste mit 1 bis 30 Kohlenstoffatomen bedeutet R⁶ Wasserstoff oder C₁₋₄-Alkyl bzw. deren Mischung bedeutet, d Werte zwischen 0 und 2,1 sowie e Werte zwischen 0,01 und 4 annimmt, oder Mischungen dieser Verbindungen mit hochdisperser Kieselsäure enthalten. Als Rest R⁵ sind Methylgruppen bevorzugt. R⁵ kann jedoch auch jeder andere bekannte Kohlenwasserstoffrest sein. Das schließt u. a. folgende Reste ein: n-Alkylreste mit 2 bis 20 Kohlenstoffatomen, wie z. B. Ethyl, Hexyl, Cyclohexyl; iso-Alkylreste mit 3 bis 20 Kohlenstoffatomen, wie Isopropyl- und Isoamylreste; Alkylreste mit tertären Kohlenstoffatomen, wie tert.-Butyl und tert.-Pentyl; aromatische Kohlenwasserstoffreste, wie Phenyl-, Naphtyl-, Anthrylreste; Alkylarylreste, bei denen das Silicium entweder an einen aromatischen Kohlenstoff, wie z. B. bei Tolylresten, oder an einen aliphatischen Kohlenstoff, wie z. B. bei Benzylresten, gebunden ist; Reste mit olefinischen Doppelbindungen, wie z. B. Vinyl-, Allyl- und Norbornylreste sowie substituierte Kohlenwasserstoffreste, wie z.B. Trifluorpropyl-, Cyanoethyl-, Aminopropyl-, Alkoxyaryl-, Alkoxyalkyl- und Halogenarylreste.

Als siliciumorganischen Verbindungen können monomere Verbindungen sowie lineare oder verzweigte Polymere und Oligomere eingesetzt werden. Beispiele sind Siliconharze, die im wesentlichen aus Einheiten der allgemeinen Formel R⁵SiO_{3/2} aufgebaut sind und über kondensationsfähige Gruppen wie Hydroxy- und Alkoxygruppen verfügen.

Als weitere Bestandteile können die wäßrigen, siliciumorganische Verbindungen enthaltenden Zusammensetzungen bekanntermaßen Emulgatoren, Dispergiermittel, Füllstoffe (wie Kreide, hochdisperse Kieselsäure, Bentone und Glimmer), Pigmente, Farbstoffe, Thixotropiehilfsmittel, Verdicker und Konservierungsmittel enthalten. Die Herstellung von Emulsionen, Dispersionen und Suspensionen, auf Basis siliciumorganischer Verbindungen ist dem Fachmann bekannt.

Emulsionen oder Dispersionen von Siliconharzen, die die erfindungsgemäßen Katalysatoren enthalten, kommen u. a. als Bindemittel in Anstrichstoffen, wie Fassadenfarben, zur Imprägnierung von Baustoffen, Mauerwerk und zementgebundenen Faserbauteilen, als Bestandteil von Pflegemitteln und zur Herstellung von Formkörpern aus anorganischen Fasern, wie z. B. Steinwolle und Glasseide, zum Einsatz.

Ein weiteres Beispiel für derartige Formulierungen sind Siliconharze enthaltende, wäßrige Suspensionen für die Herstellung von Isolierstoffen auf Glimmerbasis. Dabei kann durch die höhere Reaktivität der erfindungsgemäßen Katalysatoren die Einsatzmenge im Vergleich zu Katalysatoren nach dem Stand der Technik vermindert werden. Das ist sowohl ökonomisch von Vorteil und trägt auch zur Entlastung des bei der Herstellung der Glimmerisolierstoffe anfallenden Abwassers bei. Dabei erweist sich die Wasserunlöslichkeit der erfindungsgemäßen Katalysatoren ebenfalls als Vorteil.

Die Vernetzung von Siliconharzen, aus denen durch Pyrolyse keramische Werkstoffe, wie z. B. Siliziumcarbid, hergestellt werden, ist ebenfalls ein Anwendungsgebiet der erfindungsgemäßen Katalysatoren.

Wird als siliciumorganische Verbindung ein OH-terminiertes Polydimethylsiloxan (z. B. durch Emulsionspolymerisation hergestellt) in Kombination mit einem Silan oder Siloxan mit mindestens 3 reaktiven Gruppen, die in Silanolgruppen überführbar sind, und/oder hochdisperser Kieselsäure verwendet, so erhält man eine Siliconkautschukemulsion. Die erfindungsgemäßen Katalysatoren kommen auch in diesen Produkten zur Beschleunigung der Vernetzung bzw. Aushärtung zum Einsatz. Die Siliconkautschukemulsionen können u.a. als Dichtmassen, Trennbeschichtungen oder zu Imprägnierung von Geweben und Fasern eingesetzt werden.

Es war vollkommen überraschend, daß sich die katalytische Aktivität der metallorganischen Verbindung durch die Silanisierung extrem erhöhte.

Die erfindungsgemäßen Katalysatoren können überall dort vorteilhaft eingesetzt werden, wo bei der Herstellung und/oder Verarbeitung von monomeren, oligomeren und/oder polymeren siliciumorganischen Verbindungen Kondensationsreaktionen beschleunigt werden sollen.

### Ausführungsbeispiele

### Beispiel 1

Zu 45 g Isopropyl-Methyl-Titanatpolymer (PMTP) wurden 15 g N-Aminoethyl-3-aminopropyl-trimethoxysilan sowie 40 g dest. Wasser zugegeben und innig vermischt.
Die erhaltene Paste wurde nach einer Standzeit von mehr als 24 Stunden als Katalysator in einer Papierblattbildungsapparatur gemeinsam mit Glimmerpulver, Methylsiliconharzpulver und Wasser zur Prepregherstellung eingesetzt. Verwendet wurden 5, 10 und 15 Gew.-% des Katalysators, bezogen auf die Menge an Methylsiliconharz. Die verpreßten und ausgehärteten Isoliermaterialien wurden anschließend geprüft. Tabelle 1 enthält die Ergebnisse der Wasseraufnahmeprüfung nach 24 stündiger Lagerung bei Raumtemperatur (RT).

**Tabelle 1**

| Katalysatorzusatz (%) | Wasseraufnahme ohne Silanisierung (%) | Wasseraufnahme mit Silanisierung (%) |
|---|---|---|
| 5 | 11,6 | 0,2 |
| 10 | 13,5 | 0,1 |
| 15 | 14,8 | 0,3 |

### Beispiel 2

50 g pulvrige Aluminiumseife wurden mit 500 g einer 10 %igen wäßrigen Silanlösung (Silan analog Beispiel 1) verrührt, nach 1 Stunde abfiltriert und bei 100 °C über 2 Stunden getrocknet. Das gemahlene Produkt wird als Katalysator analog Beispiel 1 eingesetzt.
Die verpreßten und ausgehärteten Isoliermaterialien wurden anschließend geprüft. Tabelle 2 enthält die Ergebnisse der Wasseraufnahmeprüfung nach 24 stündiger Lagerung bei RT.

**Tabelle 2**

| Katalysatorzusatz (%) | Wasseraufnahme ohne Silanisierung (%) | Wasseraufnahme mit Silanisierung (%) |
|---|---|---|
| 5 | 6,8 | 0,3 |
| 10 | 4,8 | 0,4 |
| 15 | 4,0 | 0,3 |

### Beispiel 3

50 g pulvrige Aluminiumseife wurden mit 50 g Silan (analog Beispiel 1) bei RT vermischt. Durch die ablaufende chemische Reaktion erwärmte sich die Mischung. Nach 24 Stunden wurde ein steinhartes Reaktionsprodukt erhalten, welches nach dem Pulverisieren als Katalysator zur Prepreg- und Isolierplattenherstellung analog Beispiel 1 eingesetzt wurde. Verwendet wurden 1, 5 und 15 Gew.-% des Katalysators, bezogen auf das eingesetzte Methylsiliconharz.
Tabelle 3 enthält die Wasseraufnahmewerte der Prüfplatten.

**Tabelle 3**

| Katalysatorzusatz (%) | Wasseraufnahme ohne Silanisierung (%) | Wasseraufnahme mit Silanisierung (%) |
|---|---|---|
| 1 | 11,9 | 0,7 |
| 5 | 4,8 | 0,1 |
| 15 | 4,0 | 0,05 |

Aus Tabelle 3 ist klar ersichtlich, daß bei Verwendung des erfindungsgemäßen Katalysators die Menge an Katalysator sehr stark reduziert werden kann.

Alle Angaben in den Beispielen 1 bis 3 beziehen sich auf eine definierte Glimmerqualität.

### Beispiel 4

100 Teile einer anionisch stabilisierten Emulsion auf Basis von α,ω-Dihydroxypolydimethylsiloxan wurden mit 5 Teilen einer hydrophilen, pyrogenen Kieselsäure mit einer BET-Oberfläche von 200 g/m², 2 Teilen Vinyltriethoxysilan und 2 Teilen Katalysator aus Beispiel 1 vermischt. Die entstehende Paste bildet nach Entfernung des Wassers ein Elastomeres.

## Patentansprüche

1. Katalysatorpartikel zur Herstellung und Verarbeitung von Polyorganosiloxanen durch Kondensation in wäßrigen Formulierungen, darstellend eine silanisierte Verbindung mit einer Partikelgröße von 0,1 bis 100 µm, welche erhalten wird durch Umsetzung von
(A) einer oder mehrerer Verbindungen der allgemeinen Formel
R¹ _{b}MR² _{(w-b)-(z.c)}L_{c} (I),
wobei R¹ gleiche oder verschiedene, substituierte und/oder unsubstituierte Carboxylreste mit 1 bis 30 Kohlenstoffatomen und/oder gleiche oder verschiedene, substituierte und/oder unsubstituierte Alkoxyreste mit 1 bis 4 Kohlenstoffatomen sowie R² gleiche oder verschiedene, substituierte und/oder unsubstituierte Kohlenwasserstoffreste mit 1 bis 10 Kohlenstoffatomen darstellen, M ein Metall der 2., 3. oder 4. Haupt- oder 2.bis 8. Nebengruppe des Periodensystems ist, L gleiche oder verschiedene Chelatliganden mit z Bindungen zum Metall M darstellt, w die Koordinationszahl von M ist, b einen Wert zwischen 1 und w sowie c Werte zwischen 0 und 3 annehmen, und/oder deren partiellen Hydrolysaten, mit
B) einer siliciumorganische Verbindung der allgemeinen Formel
R³ ₐSiX₍₄₋ₐ₎ (II),
wobei R³ gleiche oder verschiedene, substituierte und/oder unsubstituierte Kohlenwasserstoffreste mit 1 bis 10 Kohlenstoffatomen mit der Maßgabe bedeutet, daß mindestens ein Rest R³ je Verbindung (II) eine polare Gruppierung enthält, X ein hydrolysierbarer Rest, ausgewählt aus Alkoxy-, Alkenoxy-, Acetoxy,- Amino-, Amido-, Aminoxy-, Oximo- und/oder Halogengruppen und a eine ganze Zahl zwischen 1 und 3 ist, und/oder deren partiellen Hydrolysaten.

2. Katalysator nach Anspruch 1, dadurch gekennzeichnet, daß die eingesetzte Verbindung der allgemeinen Formel (I) fest oder pulverförmig ist.

3. Katalysator nach Anspruch 1, dadurch gekennzeichnet, daß die eingesetzte Verbindung der allgemeinen Formel (I) hydrophob ist.

4. Katalysator nach Anspruch 1, dadurch gekennzeichnet, daß die Verbindung der allgemeinen Formel (I) wasserunlöslich ist.

5. Katalysator nach Anspruch 1 dadurch gekennzeichnet, daß als Metall M Zinn, Zink, Aluminium, Zirkonium, Eisen, Titan oder Hafnium eingesetzt werden.

6. Katalysator nach Anspruch 1, dadurch gekennzeichnet, daß als Verbindung der allgemeinen Formel (I) Aluminiumseifen von Carbonsäuren mit 4 bis 18 Kohlenstoffatomen eingesetzt werden.

7. Katalysator nach Anspruch 1, dadurch gekennzeichnet, daß als Verbindung der allgemeinen Formel (I) polymere Alkyltitanate eingesetzt werden.

8. Katalysator nach Anspruch 1, dadurch gekennzeichnet, daß in der allgemeinen Formel (II) mindestens ein Rest R³ eine Gruppierung mit einem basischen Stickstoff enthält und der Rest X Alkoxygruppen mit 1 bis 4 Kohlenstoffatomen bedeutet.

9. Katalysator nach Anspruch 1, dadurch gekennzeichnet, daß in der allgemeinen Formel (II) mindestens ein Rest R³ eine R⁴₂N[YN(R⁴)]ₙY-Gruppierung darstellt und der Rest X ein Alkoxyrest ist, wobei R⁴ gleiche oder verschiedene, substituierte und/oder unsubstituierte Reste mit 1 bis 10 Kohlenstoffatomen oder Wasserstoff, Y gleiche oder verschiedene, substituierte und/oder unsubstituierte, zweiwertige Kohlenwasserstoffreste mit 2 bis 6 Kohlenstoffatomen darstellt und n einen Wert zwischen 1 und 4 annimmt.

10. Katalysator nach Anspruch 1, erhalten durch Umsetzung von einer oder mehreren Verbindungen der allgemeinen Formel (I) mit einer oder mehreren Verbindungen der allgemeinen Formel (II) in Gegenwart von Wasser.

11. Katalysator nach Anspruch 10, dadurch gekennzeichnet, daß 0,1 bis 50 Gew.-% Wasser, bezogen auf die Gesamtmenge, verwendet werden.

12. Verwendung des Katalysators nach Anspruch 1 in wäßrigen, siliciumorganische Verbindungen enthaltenden Zusammensetzungen.

13. Verwendung des Katalysators in wäßrigen, siliciumorganische Verbindungen enthaltende Zusammensetzungen nach Anspruch 12, dadurch gekennzeichnet, daß sie 0,02 bis 20 Gew.% eines oder mehrerer Katalysatoren gemäß Anspruch 1 enthalten.

14. Verwendung des Katalysators in wäßrigen, siliciumorganische Verbindungen enthaltende Zusammensetzungen nach Anspruch 12, dadurch gekennzeichnet, daß als siliciumorganische Verbindungen eine oder mehrere Verbindungen der allgemeinen Formel
R⁵ _{d} (R⁶O)ₑSiO_{(4-d-e)/2} (III),
wobei R⁵ gleiche oder verschiedene, gesättigte und/oder ungesättigte, substituierte und/oder unsubstituierte einwertige Kohlenwasserstoffreste mit 1 bis 30 Kohlenstoffatomen bedeutet, R⁶ Wasserstoff oder C₁₋₄-Alkyl bzw. deren Mischung bedeutet, d Werte zwischen 0 und 2,1 sowie e Werte zwischen 0,01 und 4 annimmt, oder Mischungen dieser Verbindungen mit hochdisperser Kieselsäure verwendet werden.

15. Verwendung des Katalysators in wäßrigen, siliciumorganische Verbindungen enthaltenden Zusammensetzungen nach Anspruch 12 zur Herstellung von Glimmerisolierstoffen.

## Claims

1. Catalyst particles for preparing and processing polyorganosiloxanes by condensation in aqueous formulations, made up of a silanized compound having a particle size of from 0.1 to 100 µm, which is obtained by reacting
(A) one or more compounds of the general formula
R¹ _{b}MR² _{(w-b)-(z.c)}L_{c} (I),
where R¹ are identical or different, substituted and/or unsubstituted carboxyl groups having from 1 to 30 carbon atoms and/or identical or different, substituted and/or unsubstituted alkoxy groups having from 1 to 4 carbon atoms and R² are identical or different, substituted and/or unsubstituted hydrocarbon radicals having from 1 to 10 carbon atoms, M is a metal of main group II, III or IV or of transition groups II to VIII of the Periodic Table, L are identical or different chelating ligands having z bonds to the metal M. w is the coordination number of M, b has a value from 1 to w and c has a value from 0 to 3, and/or their partial hydrolysates, with
B) an organosilicon compound of the general formula
R³ ₐSiX₍₄₋ₐ₎ (II),
where R³ are identical or different, substituted and/or unsubstituted hydrocarbon radicals having from 1 to 10 carbon atoms, with the proviso that at least one radical R³ per compound (II) contains a polar group, X is a hydrolyzable group selected from among alkoxy, alkenoxy, acetoxy, amino, amido, aminoxy, oximo and/or halogen groups and a is an integer from 1 to 3, and/or their partial hydrolysates.

2. A catalyst as claimed in claim 1, wherein the compound of the general formula (I) which is used is solid or pulverulent.

3. A catalyst as claimed in claim 1, wherein the compound of the general formula (I) which is used is hydrophobic.

4. A catalyst as claimed in claim 1, wherein the compound of the general formula (I) is insoluble in water.

5. A catalyst as claimed in claim 1, wherein the metal M used is tin, zinc. aluminum, zirconium, iron, titanium or hafnium.

6. A catalyst as claimed in claim 1, wherein the compounds of the general formula (I) which are used are aluminum soaps of carboxylic acids having from 4 to 18 carbon atoms.

7. A catalyst as claimed in claim 1, wherein the compounds of the general formula (I) which are used are polymeric alkyl titanates.

8. A catalyst as claimed in claim 1, wherein, in the general formula (II), at least one radical R³ contains a group having a basic nitrogen and the group X is an alkoxy group having from 1 to 4 carbon atoms.

9. A catalyst as claimed in claim 1, wherein, in the general formula (II), at least one radical R³ is a R⁴₂N[YN(R⁴)]ₙY group and the group X is an alkoxy group. where R⁴ are identical or different, substituted and/or unsubstituted radicals having from 1 to 10 carbon atoms or hydrogen, Y are identical or different, substituted and/or unsubstituted, divalent hydrocarbon radicals having from 2 to 6 carbon atoms and n has a value from 1 to 4.

10. A catalyst as claimed in claim 1 obtained by reacting one or more compounds of the general formula (I) with one or more compounds of the general formula (II) in the presence of water.

11. A catalyst as claimed in claim 10, wherein from 0.1 to 50% by weight of water, based on the total amount, are used.

12. The use of a catalyst as claimed in claim 1 in aqueous compositions comprising organosilicon compounds.

13. The use of the catalyst in aqueous compositions comprising organosilicon compounds as claimed in claim 12, wherein the compositions contain from 0.02 to 20% by weight of one or more catalysts as claimed in claim 1.

14. The use of the catalyst in aqueous compositions comprising organosilicon compounds as claimed in claim 12, wherein the organosilicon compounds used are one or more compounds of the general formula
R⁵ _{d}(R⁶O)ₑSiO_{(4-d-e)/2} (III),
where R⁵ are identical or different, saturated and/or unsaturated, substituted and/or unsubstituted monovalent hydrocarbon radicals having 1 to 30 carbon atoms, R⁶ is hydrogen or C₁₋₄-alkyl or a mixture thereof, d has a value from 0 to 2, 1 and e have values from 0.01 to 4, or mixtures of these compounds with finely divided silica.

15. The use of the catalyst in aqueous compositions comprising organosilicon compounds as claimed in claim 12 for producing mica insulation materials.

## Revendications

1. Particule de catalyseur pour la fabrication et la transformation de polyorganosiloxanes par condensation dans des formulations aqueuses représentant un composé silané d'une granulométrie située entre 0,1 et 100 µm lequel est obtenu par transformation
(A) d'un ou plusieurs composés de formule générale
R¹ _{b}MR² _{(w-b)-(z.c)}L_{c} (I),
où R¹ représente des radicaux carboxyliques identiques ou différents,
substitués et/ou non substitués avec 1 à 30 atomes de carbone et/ou des radicaux alcoxy identiques ou différents, substitués et/ou non substitués avec 1 à 4 atomes de carbone et R² des radicaux d'hydrocarbure identiques ou différents, substitués et/ou non substitués avec 1 à 10 atomes de carbone, M étant un métal du groupe principal 2, 3 ou 4 ou des groupes secondaires 2 à 8 du tableau périodique, L représentant des ligands identiques ou différents de chélate disposant de z liaisons avec le métal M, w étant l'indice de coordination de M, b étant une valeur entre 1 et w et c prenant des valeurs situées entre 0 et 3, et/ou de leurs hydrolysats partiels avec
B) un composé organo-silicique de formule générale
R³ ₐSiX₍₄₋ₐ₎ (II),
où R³ représente des radicaux d'hydrocarbure identiques ou différents,
substitués et/ou non substitués avec 1 à 10 atomes de carbone, où au moins un radical R³ par composé (II) contient un groupement polaire, X étant un radical hydrolysable sélectionné parmi les groupes alcoxy, alcèneoxy, acétoxy, amino, amido, aminoxy, oximo et/ou halogène et a étant un nombre entier situé entre 1 et 3, et/ou ses hydrolysats partiels.

2. Catalyseur selon la revendication 1 caractérisé en ce que le composé utilisé de formule générale (I) est de forme solide ou poudreuse.

3. Catalyseur selon la revendication 1 caractérisé en ce que le composé utilisé de formule générale (I) est hydrophobe.

4. Catalyseur selon la revendication 1 caractérisé en ce que le composé utilisé de formule générale (I) est indissoluble dans l'eau.

5. Catalyseur selon la revendication 1 caractérisé par l'utilisation d'étain, de zinc, d'aluminium, de zirconium, de fer, de titane ou de hafnium comme métal M.

6. Catalyseur selon la revendication 1 caractérisé par l'utilisation d'alluvions d'aluminium issus d'acides carboxyliques avec 4 à 18 atomes de carbone comme composé de formule générale (I).

7. Catalyseur selon la revendication 1 caractérisé par l'utilisation de titanates polymères d'alkyl comme composé de formule générale (I).

8. Catalyseur selon la revendication 1 caractérisé en ce qu'au moins un radical R³ de la formule générale (II) contient un groupement avec un azote basique et que le radical X correspond à des groupes alcoxy avec 1 à 4 atomes de carbone.

9. Catalyseur selon la revendication 1 caractérisé en ce que, dans la formule générale (II), au moins un radical R³ représente un groupement R⁴₂N[YN(R⁴)]ₙY et que le radical X est un radical alcoxy, R⁴ représentant des radicaux identiques ou différents, substitués et/ou non substitués avec 1 à 10 atomes de carbone ou de l'hydrogène, Y des radicaux bivalents d'hydrocarbure identiques ou différents, substitués et/ou non substitués avec 2 à 6 atomes de carbone, n prenant une valeur située entre 1 et 4.

10. Catalyseur selon la revendication 1 obtenu par transformation en présence d'eau d'un ou de plusieurs composés de formule générale (I) avec un ou plusieurs composés de formule générale (II).

11. Catalyseur selon la revendication 10 caractérisé par l'utilisation de 0,1 à 50 % en poids d'eau par rapport à la quantité totale.

12. Utilisation du catalyseur selon la revendication 1 dans des compositions aqueuses contenant des composés organo-siliciques.

13. Utilisation du catalyseur dans des compositions aqueuses contenant des composés organo-siliciques selon la revendication 12, caractérisées en ce qu'elles contiennent entre 0,02 et 20 % en poids d'un ou de plusieurs catalyseurs selon la revendication 1.

14. Utilisation du catalyseur dans des compositions aqueuses contenant des composés organo-siliciques selon la revendication 12, caractérisée par l'utilisation d'un ou de plusieurs composés de formule générale
R⁵ _{d} (R⁶O)ₑSiO_{(4-d-e)/2} (III),
R⁵ étant des radicaux monovalents d'hydrocarbure identiques ou différents, saturés et/ou non saturés, substitués et/ou non substitués avec 1 à 30 atomes de carbone, R⁶ étant de l'hydrogène ou de l'alkyl C₁₋₄ ou leur mélange, d prenant des valeurs situées entre 0 et 2,1 et e des valeurs situées entre 0,01 et 4, ou des mélanges de ces composés avec de l'acide silicique à haute dispersion comme composés organo-siliciques.

15. Utilisation du catalyseur dans des compositions aqueuses contenant des composés organo-siliciques selon la revendication 12, pour la fabrication de matériaux isolants micacés.
